## Europäisches Patentamt
## European Patent Office
## Office européen des brevets

(19)

(11) Veröffentlichungsnummer: **0 095 619**
**A2**

(12) **EUROPÄISCHE PATENTANMELDUNG**

(21) Anmeldenummer: 83104669.3

(22) Anmeldetag: 11.05.83

(51) Int. Cl.³: **G 10 K 11/02**

(30) Priorität: 24.05.82 DE 3219447

(43) Veröffentlichungstag der Anmeldung: 07.12.83
Patentblatt 83/49

(84) Benannte Vertragsstaaten: **DE FR GB IT**

(71) Anmelder: **INTERATOM Internationale Atomreaktorbau GmbH, Friedrich-Ebert-Strasse, D-5060 Bergisch Gladbach 1 (DE)**

(72) Erfinder: **Barzantny, Joachim, Im Wiesengrund 42, D-5067 Kürten-Eichhof (DE)**
Erfinder: **Podgorski, Jan, Dipl.-Ing., Giselbertstrasse 6, D-5060 Bergisch-Gladbach (DE)**

(74) Vertreter: **Mehl, Ernst, Dipl.-Ing. et al, Postfach 22 01 76, D-8000 München 22 (DE)**

(54) **Koppelmedium zur akustischen Ankopplung bei hohen Temperaturen und Verfahren zu seiner Anwendung.**

(57) In der vorliegenden Erfindung wird vorgeschlagen zur Ankopplung von Schallsendern und/oder Empfängern an eine Struktur ein feines Metallpulver zu verwenden. Als besonders geeignet hat sich Nickelpulver mit einer Korngröße von 1–10 µm erwiesen. Durch Aneinanderpressen der gekoppelten Bauteile entsteht eine Vorstufe zum Sinterkörper, welcher gute Ankopplungseigenschaften auch bei Temperaturschwankungen aufweist. Für gekrümmte Ankoppelflächen wird eine teigige Mischung aus feinem Metallpulver und einem bei Betriebstemperatur flüssigen Metall, vorzugsweise Gallium, vorgeschlagen. Dieses Medium läßt sich auch auf gekrümmte Flächen leicht aufbringen, und Gallium besitzt besonders günstige Eigenschaften für eine solche akustische Kopplung.

EP 0 095 619 A2

**82 P 6 7 2 1 E**

INTERATOM                    -1-                    24.633.6

Internationale Atomreaktorbau GmbH.

D 5o6o Bergisch Gladbach 1

## Koppelmedium zur akustischen Ankopplung bei hohen Temperaturen und Verfahren zu seiner Anwendung

Die vorliegende Erfindung betrifft ein Koppelmedium zur akustischen Ankopplung von Schallsendern und/oder Empfängern an eine Struktur bei hoher Temperatur und ggf. schwierigen Oberflächenverhältnissen. Außerdem wird ein Verfahren zur Anwendung des Koppelmediums angegeben. Bei der Werkstoffprüfung mit Hilfe von Ultraschall und bei anderen Prüf- und Überwachungseinrichtungen ist es nötig, einen Schallsender oder -empfänger an eine Struktur anzukoppeln. Während dies bei niedriger Temperatur und glatten Oberflächen kein Problem mehr darstellt, ist die Ankopplung bei hohen Temperaturen ein Problem. Die für niedrige Temperaturen geeigneten Ankopplungsmedien, beispielsweise Öl oder Kunststoffe, sind bei hoher Temperatur nicht mehr zu verwenden.

Beim Ankoppeln an Strukturen von hoher Temperatur hat man bisher versucht, durch sehr genaues Planschleifen und starkes Anpressen des Schallwandlers eine hinreichende Ankopplung zu erreichen. Es wurden auch Versuche mit Zwischenfolien aus weichen Metallen oder deren Legierungen gemacht. Trotzdem traten Probleme bei Temperaturänderungen auf, da dann die Ankopplung durch unterschiedliche Ausdehnung der Materialen und ähnliche Mechanismen nicht konstant gehalten werden konnte. Auch ist das Planschleifen eine sehr aufwendige Methode, welche zudem bei hochbelasteten Rohren beispielsweise nicht möglich ist. Ein weiteres Problem entsteht bei der Veränderung der Werkstoffeigenschaften bei hohen Temperaturen und der Einwirkung der Koppelmedien.
Aufgabe der vorliegenden Erfindung ist daher ein Koppelmedium,

18.o5.1982 Nw/Hf

was die bisherigen Nachteile vermeidet. Eine Ankopplung soll zuverlässig auch bei Temperaturschwankungen möglich sein, vorherige Bearbeitung der Ankoppelflächen soll weitestgehend vermieden werden, und das Koppelmedium soll nach der Messung leicht zu beseitigen sein.

Zur Lösung dieser Aufgabe wird ein Koppelmedium nach dem Hauptanspruch vorgeschlagen. Demgemäß wird ein feines Metallpulver zwischen Struktur und Schallwandler gebracht, wodurch die Kopplung optimal hergestellt werden kann. Ein feines Metallpulver, welches zwischen zwei Flächen gepreßt wird, geht dabei sozusagen in die Vorstufe eines Sintermaterials über und wird somit für den Schall gut leitend.

Gemäß dem Anspruch 2 wird dabei vorgeschlagen, daß die Korngröße des Metallpulvers zwischen 0 und 50 $\mu$m liegt. Bei Korngrößen in diesem Bereich entsteht ein genügend schallleitender Übergang zwischen den Ankoppelflächen.

In besonderer Ausgestaltung der Erfindung wird nach dem Anspruch 3 vorgeschlagen, als Metallpulver Nickelpulver zu wählen. Die physikalischen, chemischen und mechanischen Eigenschaften von Nickel sind für die vorgesehene Aufgabe im Temperaturbereich von einigen Hundert Grad Celsius besonders günstig.

Im Anspruch 4 wird ergänzend dazu vorgeschlagen, die Korngröße des Nickelpulvers im Bereich von 1 bis 10 $\mu$m zu wählen, was sich als besonders günstig erwiesen hat.

Bei gewölbten Ankoppelflächen hat es sich aber als schwierig erwiesen, eine geeignete Schicht der feinen Metallpulvers aufzubringen. Für diesen besonderen Fall wird nach Anspruch 5 daher vorgeschlagen, daß als Koppelmedium eine teigige Mischung aus feinem Metallpulver und einem bei Betriebstemperatur flüssigen Metall dienen soll. Es hat sich gezeigt, daß eine solche Mischung alle gewünschten Eigenschaften für eine optimale Ankopplung auch bei gewölbten
Flächen aufweist. Bei der Wahl eines geeigneten flüssigen
Metalls entsteht eine hervorragend benetzende Zwischenschicht, welche durch die Anwesenheit des Metallpulvers
auch nicht beliebig zusammengedrückt werden kann. Selbst
bei Temperaturschwankungen bleibt die Kopplung erhalten.
Dabei ist die Mischung aus feinem Metallpulver und flüssigem
Metall der Verwendung von Metallpulver allein oder
flüssigem Metall allein deutlich überlegen.

Gemäß dem Anspruch 6 hat sich als besonders geeignetes
flüssiges Metall Gallium erwiesen. Die chemischen und
physikalischen Eigenschaften von Gallium lassen es als
ganz besonders geeignet für die vorliegende Aufgabe erscheinen. Zum einen ist Gallium ungiftig und chemisch
wenig aggressiv, zum anderen benetzt es besonders selbst
unbearbeitete Oberflächen. Mit einem Schmelzpunkt von
etwa $30^{o}$C und einem Siedepunkt oberhalb von $2000^{o}$C ist
es außerdem in dem gewünschten Temperaturbereich flüssig,
ohne aber einen großen Dampfdruck aufzuweisen. Dadurch besteht kein Risiko der Blasenbildung in der Kopplungsschicht,
welche die akustische Ankopplung erheblich verschlechtern
würde. Da Gallium außerdem wenig oxydationsanfällig ist
und selbst oxydierte, leicht rauhe Oberflächen gut benetzt, kann es als bevorzugtes Material für eine akustische
Ankopplung angesehen werden.

Im Anspruch 7 wird eine Zusammensetzung des Koppelmediums
angegeben, welche sich im Versuch als besonders günstig
erwiesen hat. Dazu werden 90% (Gewichtsanteil) Nickelpulver
und 10% Gallium gemischt.

82 P 6 7 2 1 E

-4-                    24.633.6

In den Ansprüchen 8 und 9 werden jeweils Verfahren zur Anwendung der vorgeschlagenen Koppelmedien angegeben. Der
Anspruch 8 beschäftigt sich dabei mit der Anwendung des
Metallpulvers, welches nicht mit einem flüssigen Metall
vermengt ist. Dieses Koppelmedium, welches bei glatten
und ebenen Oberflächen zur Anwendung kommt, wird dabei
einfach auf die Ankoppelfläche der Struktur gestreut und
anschließend das anzukoppelnde Bauteil angepreßt. Der
Anpreßdruck muß dabei gar nicht besonders hoch sein, da
bei einem feinkörnigen Pulver und relativ hoher Temperatur
die Fließgrenze an den Berührungsstellen der Körner relativ
leicht erreicht wird.

Im Anspruch 9 wird ein Verfahren zur Anwendung insbesondere
bei gekrümmten bzw. nicht waagerecht liegenden Oberflächen
vorgeschlagen. In solchen Fällen läßt sich ein Metallpulver
nicht mehr gleichmäßig aufbringen, weshalb vorgeschlagen wird,
ein flüssiges Metall, welches mit einem feinen Metallpulver
zu einer teigigen Masse vermischt ist, zu verwenden. Sind die
Oberflächen nicht besonders geglättet und gereinigt, so
empfiehlt es sich, die Oberflächen der Struktur und des anzukoppelnden Bauteiles zunächst mit dem flüssigen Metall zu
benetzen. Bei Verwendung von Gallium als flüssiges Metall
ist dies selbst bei oxydierten Oberflächen möglich. Anschließend wird das teigige Koppelmedium auf die Ankoppelfläche der Struktur aufgebracht. Dies kann beipielsweise durch
Bestreichen geschehen. Auf eine besonders gleichmäßige Verteilung muß dabei nicht einmal geachtet werden, da beim
folgenden Anpressen des anzukoppelnden Bauteiles das Koppelmedium den Raum zwischen Struktur und anzukoppelndem Bauteil
gleichmäßig erfüllt. Versuche über längere Zeiträume und
bei Temperaturschwankungen haben gezeigt, daß bei geeignetem
Mischungsverhältnis die Flüssigkeit nicht aus der Zwischenschicht herausläuft, da sie durch Oberflächenkräfte zwischen den feinen Metallkörnern gehalten wird. Auch ein Herauspressen der Zwischenschicht ist kaum möglich, da sich das Metallpulver trotz Anwesenheit des flüssigen Metalls eher wie ein Sinterkörper verhält.

Als besonderes Anwendungsgebiet für das vorgeschlagene Koppelmedium sind Materialprüfungen bei erhöhter Temperatur, beispielsweise an Kernenergieanlagen, oder akustische Meßsysteme an heißen Rohrleitungen vorgesehen.

INTERATOM -6- 24.633.6

Internationale Atomreaktorbau GmbH.

D 5o6o Bergisch Gladbach

Koppelmedium zur akustischen Ankopplung bei hohen
Temperaturen und Verfahren zu seiner Anwendung

Patentansprüche

1) Koppelmedium zur akustischen Ankopplung von Schallsendern
und/oder Empfängern an eine Struktur bei hoher Temperatur,
g e k e n n z e i c h n e t   d u r c h  folgendes Merkmal:

a) Das Medium besteht größtenteils aus feinem Metallpulver.

2) Koppelmedium nach Anspruch 1, g e k e n n z e i c h n e t
d u r c h  folgendes Merkmal:

a) Die Korngröße des Metallpulvers liegt zwischen o - 50 μm

3) Koppelmedium nach Anspruch 1, g e k e n n z e i c h n e t
d u r c h  folgendes Merkmal:

a) Das Metallpulver ist Nickelpulver.

4) Koppelmedium nach Anspruch 3, g e k e n n z e i c h n e t
d u r c h  folgendes Merkmal:

a) Das Nickelpulver hat eine Korngröße von 1 - 10 μm.

5) Koppelmedium nach Anspruch 1, g e k e n n z e i c h n e t
d u r c h  folgendes Merkmal:

a) Das Medium ist eine teigige Mischung aus feinem Metallpulver und einem bei Betriebstemperatur flüssigen Metall.

18.o5.1982 Nw/Hf

6. Koppelmedium nach Anspruch 5, g e k e n n z e i c h n e t  d u r c h  folgendes Merkmal:

a) Das flüssige Metall ist Gallium.

7. Koppelmedium nach Anspruch 6, g e k e n n z e i c h n e t  d u r c h  folgendes Merkmal:

a) Das Koppelmedium besteht aus ungefähr 90 % (Gewichts-anteil) Nickelpulver und 10% Gallium.

8. Verfahren zur Anwendung eines Koppelmediums nach einem der Ansprüche 1-4, g e k e n n z e i c h n e t  d u r c h  folgende Merkmale:

a) Das Metallpulver wird auf die Ankoppelfläche der Struktur gestreut.

b) Das anzukoppelnde Bauteil wird angepreßt.

9. Verfahren zur Anwendung eine Koppelmediums nach einem der Ansprüche 5-7, insbesondere bei gekrümmten Ankoppelflächen, g e k e n n z e i c h n e t  d u r c h  folgende Merkmale:

a) Die Ankoppelflächen der Struktur und des anzukoppelnden Bauteils werden mit dem flüssigen Metall benetzt.
b) Das teigige Koppelmedium wird auf die Ankoppelfläche der Struktur aufgebracht.
c) Das anzukoppelnde Bauteil wird angepreßt.